# NEW EUROPEAN PATENT SPECIFICATION

(11) **EP 2 023 002 B2**
(45) Date of publication and mention of the opposition decision: **02.03.2016**
(45) Mention of the grant of the patent: 17.11.2010
(21) Application number: 07743572.5
(22) Date of filing: 17.05.2007
(51) Int. Cl.: F16D 69/04, F16D 65/092

(54) **PAD FOR DISK BRAKE**
BELAG FÜR SCHEIBENBREMSE
PATIN POUR FREIN À DISQUE

(30) Priority: 24.05.2006 JP 2006144029
(43) Date of publication of application: 11.02.2009
(73) Proprietor: Nabtesco Corporation, Tokyo 105-0022 (JP)
(72) Inventor: SAITO, Makoto, Kobe-shi, Hyogo 6512271 (JP); YOKOJI, Kazuhiko, Kobe-shi, Hyogo 6512271 (JP)
(74) Representative: Müller-Boré & Partner Patentanwälte PartG mbB
(86) International application number: PCT/JP2007/060137
(87) International publication number: WO 2007/135950

(56) References cited:
- EP-A- 0 674 119
- EP-A- 0 902 210
- EP-A1- 0 508 423
- EP-A1- 0 621 415
- WO-A1-00/14422
- WO-A1-02/02963
- WO-A1-2004/051110
- DE-A1- 10 257 353
- DE-A1- 19 712 812
- FR-A- 2 620 499
- GB-A- 2 030 665
- JP-A- 08 159 187
- JP-A- 11 247 912
- JP-A- 11 270 599
- JP-A- 2001 049 467
- JP-A- 2002 524 699
- US-A- 2 793 427
- US-A- 3 534 464
- US-A- 4 278 153
- US-A- 4 456 578
- US-A- 5 518 519
- US-A- 5 841 042

## Description

### TECHNICAL FIELD

The present invention relates to a disc brake pad for a vehicle.

### BACKGROUND ART

Generally, a disc brake pad for a vehicle has a structure in which a friction material are affixed to reinforcing plates or the like attached to a backing metal plate as disclosed in Patent Documents 1 and 2 cited below, for example. Specifically, in a brake pad of Patent Document 1, pieces of friction material are sintered under conditions where the same are assembled with reinforcing plates and the reinforcing plates are secured to a backing metal plate by rivets. In a brake pad of Patent Document 2, on the other hand, a rough base material support covered with a rough base material is welded to a backing metal plate and a friction material is press-fitted to the rough base material support.
Patent Document 1: Japanese Unexamined Patent Publication No. 1995-158673
Patent Document 2: Japanese Unexamined Patent Publication No. 2004-522118

The brake pads disclosed in the aforementioned Patent Documents are provided with the reinforcing plates or the rough base material support so that the friction material itself would not come off the reinforcing plates, for instance. However, if a sintered material formed by dispersing various kinds of substances in a base material is used as the friction material, for example, the dispersed substances and the base material have different coefficients of thermal expansion. For this reason, interfacial boundaries between these substances and the base material may come apart due to frictional heat, for instance, so that there are cases where a crack develops along the interfacial boundaries in a middle portion of the friction material in a thicknesswise direction thereof. Although joining parts of the reinforcing plates or the rough base material support and the friction material are securely joined together in the brake pads, it is difficult to prevent a part of a frictional surface side of the friction material from partially coming off. Specifically, since the friction material is acted upon by a shearing force during braking, a crack, if produced in the friction material in a direction along the backing metal plate, would gradually grow larger as a result of continued use. The crack thus developed could potentially cause part of the friction material to become separated and come off.
FR-A-2 620 499 discloses a disc brake comprising a lining which is made from carbon, and which has an annular shape and is attached onto a web made from any suitable material by traversing pins. The pins are fitted in with an interference fit angularly distributed and located so that the diametral sum of their cross-sections occupies the entire radial extent of the lining, except for two annular areas adjoining the inner and outer edges of the lining.
WO-A-2004/051110 discloses a disc brake, particularly a brake pad comprising a lining support and a friction lining. At least one pin is mounted on the lining support and serves to fix the friction lining. Said pin should pass through the friction lining from approximately the middle while extending approximately up to the lining surface.

### DISCLOSURE OF THE INVENTION

It is an object of the present invention to provide a disc brake pad which solves the aforementioned problem.

A disc brake pad according to the present invention is disclosed in claim 1.

### BRIEF DESCRIPTION OF THE DRAWINGS

FIG. 1 is a plan view of a disc brake pad according to an embodiment of the present invention.
FIG. 2 is a cross-sectional diagram taken along lines II-II of FIG. 1.
FIG. 3 is a diagram showing a protruding part used in the disc brake pad associated with an enlarged fragmentary view of the protruding part.

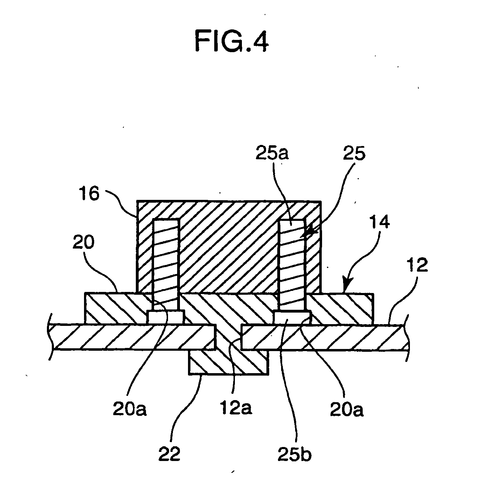

FIG. 4 is a cross-sectional diagram showing part of a variation of the disc brake pad, not forming part of the invention.
FIG. 5 is a plan view of a disc brake pad according to a comparative example.
FIG. 6 is a cross-sectional diagram taken along lines VI-VI of FIG. 5.

### BEST MODES FOR CARRYING OUT THE INVENTION

Best modes for carrying out the present invention are described in detail below with reference to the drawings.

### EMBODIMENT

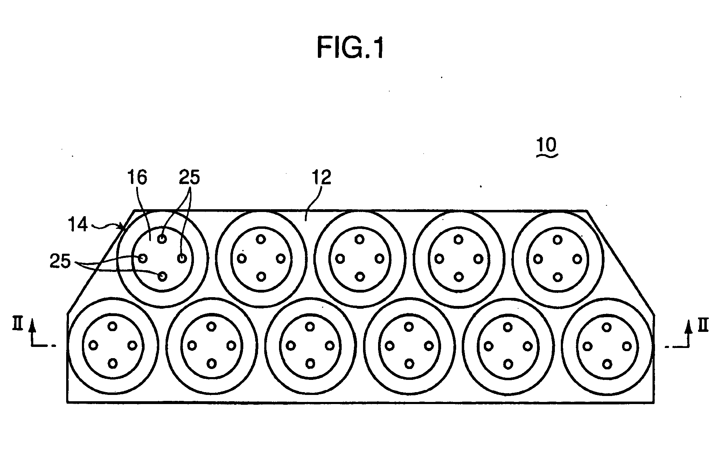

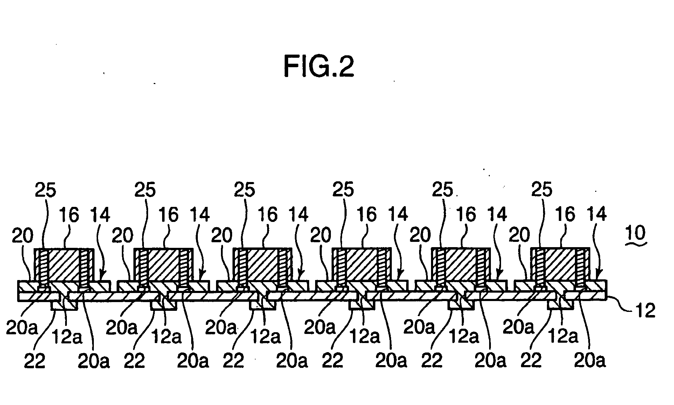

FIGS. 1 and 2 show a disc brake pad according to an embodiment of the present invention, in which FIG. 2 is a cross-sectional diagram taken along lines II-II of FIG. 1. The disc brake pad 10 of this embodiment is a brake pad which is applicable to such high-speed trains as the Shinkansen bullet train as well.

The disc brake pad 10 comprises a backing metal plate 12, reinforcing plates 14 which are an example of supporting members and pieces of friction material 16 which are fixed to the reinforcing plates 14. The backing metal plate 12 is for fixing the reinforcing plates 14 and has an elongate flat, narrow shape extending in one direction.
The backing metal plate 12 and the reinforcing plates 14 are made of iron-based material containing iron as a base material.

The backing metal plate 12 has a number of fixing holes 12a formed therein for fixing the reinforcing plates 14. Formed at equal intervals along a longitudinal direction of the backing metal plate 12, the fixing holes 12a are arranged in two rows in such a manner that the fixing holes 12a in the two rows are staggered from one another.

The reinforcing plates 14 are provided at the individual fixing holes 12a. The reinforcing plates 14 each have a main body portion 20 having a flat circular plate shape and a fixing portion 22 integrally formed with the main body portion 20 on a back side thereof (i.e., on a side opposite to the friction material piece 16). The main body portion 20 has through holes 20a which penetrate the main body portion 20 in a thicknesswise direction thereof. Each of the through holes 20a is a stepped hole of which diameter is increased in a stepwise fashion so that a back side part of the through hole 20a is larger in diameter than a front side part thereof. The fixing portion 22 is passed through each fixing hole 12a in the backing metal plate 12 and is kept from coming off the fixing hole 12a by a head of the fixing portion 22 that is made larger in diameter than that part of the fixing portion 22 which is inserted in the fixing hole 12a.

The friction material pieces 16 separately provided on the individual reinforcing plates 14 are fixed to a front side of the main body portions 20 of the reinforcing plates 14. The aforementioned structure in which the friction material pieces 16 are separately provided on the individual reinforcing plates 14 serves to improve heat dissipating property of the friction material pieces 16. The present embodiment employs such a structure that the friction material pieces 16 are fixed to the reinforcing plates 14 by sintering the friction material pieces 16.

Each of the friction material pieces 16 is formed into a cylindrical shape of which far end surface (upper end surface as illustrated in FIG. 2) constitutes a frictional surface. This frictional surface serves as a sliding contact surface which slides along an unillustrated brake disc while pressed thereagainst.

The friction material pieces 16 are constructed with a copper alloy which is a copper-based material containing copper as a base material. The friction material pieces 16 are made of sintered metal in which a small quantity of additive, such as a metallic compound of iron or the like, or graphite, is dispersed so that a high friction coefficient is obtained even at high temperatures.

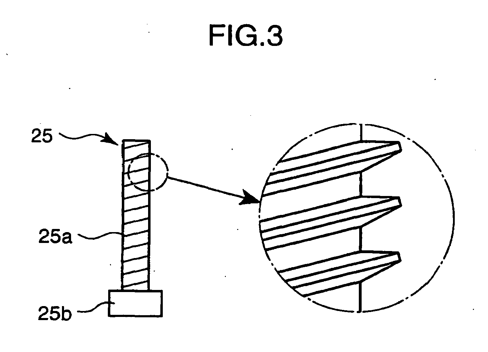

Each of the reinforcing plates 14 is provided with a plurality (four or five in the illustrated example) of protruding parts 25. The protruding parts 25 each have a rodlike portion 25a formed into a rodlike shape and a head 25b formed into a flangelike shape at an end of the rodlike portion 25a (refer to FIG. 3). The protruding parts 25 are inserted into the through holes 20a in the main body portion 20 from the back side of the main body portion 20 of each reinforcing plate 14 so that the rodlike portions 25a of the protruding parts 25 stick out from a face of the front side of the main body portion 20. The head 25b of each protruding part 25 is accommodated in a portion of each through hole 20a on the stepped back side thereof that is enlarged in diameter, whereby the head 25b is sandwiched between a front side part of the main body portion 20 of each reinforcing plate 14 and the backing metal plate 12 and thus kept from coming off the through hole 20a.

The protruding parts 25 are disposed within each of the friction material pieces 16, extending in a direction perpendicular to the frictional surface. The protruding parts 25 are made to have a height which is large enough to reach the frictional surface of each friction material piece 16. In other words, the amount of protrusion of the protruding parts 25 from each reinforcing plate 14 is made equal to the thickness of each friction material piece 16. With this arrangement, even when a crack occurs in any of the friction material pieces 16 due to a shearing force produced during braking, the presence of the protruding parts 25 ensures that the crack would not grow further.

As shown in FIG. 3, there are formed furrows and ridges on a side surface of the rodlike portion 25a of each protruding part 25. These furrows and ridges serve to increase a contact area between each protruding part 25 and the friction material piece 16 and prevent the friction material piece 16 from moving in a direction in which the friction material piece 16 comes off. In the present embodiment, the rodlike portion 25a is threaded to form the furrows and ridges on the rodlike portion 25a. The through holes 20a in the main body portion 20 of each reinforcing plate 14 are threaded holes and the protruding parts 25 are screwed into the through holes 20a. This means that the protruding parts 25 are fixed to each reinforcing plate 14 by mechanical fixing means.

The protruding parts 25 are firmly attached to the friction material pieces 16. Specifically, after assembling the protruding parts 25 into the reinforcing plates 14, the friction material pieces 16 are sintered onto the protruding parts 25 and the reinforcing plates 14. The friction material pieces 16 and the protruding parts 25 are firmly affixed together in this sintering process. The protruding parts 25 are constructed with a copper-based material containing copper as a base material, this copper-based material being similar to the material used in the friction material pieces 16. For this reason, the friction material piece 16 and the protruding parts 25 can easily be fused together when the friction material piece 16 is sintered. While the friction material pieces 16 wear out during braking, the protruding parts 25 similarly wear out at the same time.

In the disc brake pad 10 of the embodiment, there is a possibility that cracks will occur in the friction material pieces 16 due to the shearing force applied thereto during braking. Even in this case, however, an entire area of each friction material piece 16 over which the crack will grow is limited by the protruding parts 25. Moreover, even if the crack that has developed in a particular friction material piece 16 grows up to a middle portion thereof bounded by the protruding parts 25 and the friction material piece 16 goes into a condition in which the middle portion of the friction material piece 16 can be separated into a frictional surface side and a reinforcing plate side, the friction material piece 16 is retained by the protruding parts 25 as the frictional surface side of the friction material piece 16 is fixed to the protruding parts 25 as well. For this reason, it is possible to prevent the friction material piece 16 from partially coming off or scattering. In other words, it is possible to prevent the cracks from growing to such an extent that the entirety of the friction material piece 16 comes off or scatters and further prevent the friction material piece 16 from partially coming off or scattering with the provision of the protruding parts 25.

In particular, to apply the invention to high-speed trains, it is important that the friction material pieces 16 provide an adequate friction coefficient in high-temperature regions because a high temperature could occur due to frictional heat. The type and quantity of an additive are determined from this point of view. For this reason, there can be a case where the friction material pieces 16 which do not have sufficient toughness in the high-temperature regions must be used. Even in such a case, however, the disc brake pad 10 of the present embodiment can prevent the cracks from growing to such an extent that the entirety of the friction material piece 16 comes off and further prevent the friction material piece 16 from partially coming off or scattering thanks to the presence of the protruding parts 25.

Furthermore, even if the toughness of the friction material pieces 16 suitable for high-speed vehicles selected with importance given to the friction coefficient is insufficient compared to the friction material pieces 16 selected with importance given to the toughness, the disc brake pad 10 of the present embodiment can prevent the friction material pieces 16 from coming off due to growth of the cracks, for instance. Accordingly, it is possible to increase the degree of freedom with respect to choice of material, such as the type and quantity of the additive.

Also, there are formed furrows and ridges on the side surface of the rodlike portion 25a of each protruding part 25 in the embodiment. Therefore, it is possible to increase the contact area between each protruding part 25 and the friction material piece 16 and prevent the friction material piece 16 from moving in the direction in which the friction material piece 16 comes off. As a result, bond strength between the friction material piece 16 and each protruding part 25 is enhanced, making it possible to prevent the friction material pieces 16 from coming off or scattering more efficiently.

Furthermore, since the friction material piece 16 and the protruding parts 25 are constructed with the same kind of base material in the embodiment, the friction material piece 16 and the protruding parts 25 can easily be fused together in the manufacture of the disc brake pad 10. This structure serves to enhance the bond strength between the friction material piece 16 and each protruding part 25, making it possible to prevent the friction material pieces 16 from coming off or scattering more efficiently.

Moreover, since the protruding parts 25 are fixed to the reinforcing plates 14 by the mechanical fixing means in the embodiment, it is possible to select such materials for the reinforcing plates 14 and the protruding parts 25 that would not easily be fused together. Consequently, it becomes unnecessary to select materials of the reinforcing plates 14 and the protruding parts 25 based on their bond strength, making it possible to improve the degree of freedom in design with respect to the materials.

Although the protruding parts 25 are configured such that the rodlike portion 25a of each protruding part 25 is threaded to form furrows and ridges on the side surface in the embodiment, the invention is not limited to this configuration. Essentially, any form of protrusions and hollows may be created as long as these protrusions and hollows are provided at such a portion of each protruding part 25 that goes into contact with the friction material piece 16.

Additionally, although the disc brake pad 10 applied to cars of a high-speed train has been described in the embodiment, application of the present invention is not limited to high-speed vehicles.

### COMPARATIVE EXAMPLE

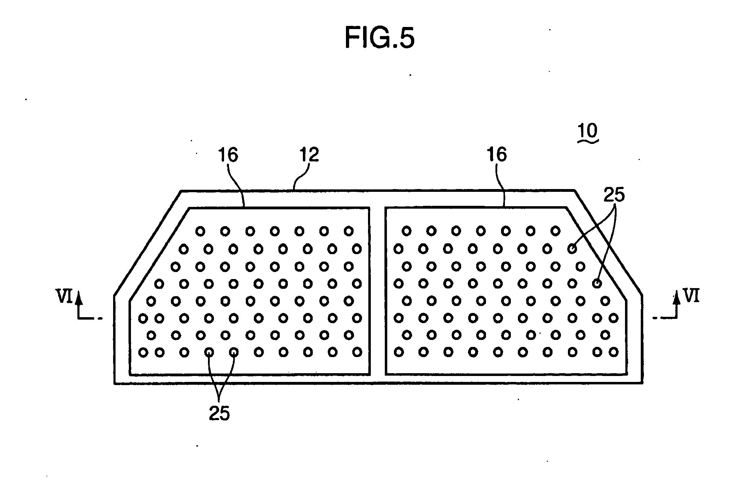

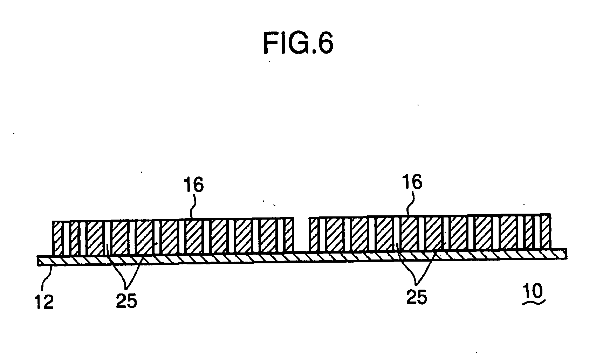

FIGS. 5 and 6 illustrate a comparative example. In the comparative example, friction material pieces 16 are firmly affixed directly to a backing metal plate 12. While the comparative example is described more specifically hereinbelow, constituent elements which are identical to those of the embodiment are designated by the same symbols and a detailed description of these elements is omitted.

While the backing metal plate 12 is configured into a flat shape as in the embodiment, the backing metal plate 12 is not provided with any fixing holes 12a unlike that of the embodiment. Additionally, the friction material pieces 16 are fixed to a front side (upper side as illustrated in FIG. 6) of the backing metal plate 12.

A large number of protruding parts 25 are provided on the backing metal plate 12 with the protruding parts 25 arranged at specific intervals. Each of the protruding parts 25 is formed into a rodlike shape and individually affixed to the front side of the backing metal plate 12.

The friction material pieces 16 are firmly affixed to the front side of the backing metal plate 12. The friction material pieces 16 are formed to a thickness appropriate for the height of the protruding parts 25. Additionally, the friction material 16 is divided into two pieces, each of the friction material pieces 16 covering approximately half of the front side of the backing metal plate 12.

The backing metal plate 12 is made of an iron-based material while the protruding parts 25 are made of a copper-based material. Each of the protruding parts 25 is configured into a rodlike shape and an end surface of each protruding part 25 is bonded to the backing metal plate 12 by welding. The protruding parts 25 are welded before the friction material pieces 16 are attached to the backing metal plate 12 by sintering. In other words, the backing metal plate 12 and the protruding parts 25 are welded together in the absence of the friction material pieces 16. Therefore, even if thermal expansion or shrinkage occurs in the protruding parts 25 in a welding process, no thermal stress occurs in joint areas between the protruding parts 25 and the backing metal plate 12 and, thus, bonding failures are unlikely to occur between the protruding parts 25 and the backing metal plate 12.

In the comparative example, each of the friction material pieces 16 is a formed as a single element to cover approximately half of the backing metal plate 12 so that a large bonding area is obtained between each friction material piece 16 and the backing metal plate 12. For this reason, there can be a case where the amount of thermal shrinkage of each friction material piece 16 varies from one point to another depending on a state of dispersion of fine particles constituting the friction material pieces 16 during a cooling phase of the sintering process thereof and, as a consequence, local variations could occur in a state of bonding between each friction material piece 16 and the backing metal plate 12. Even if the state of bonding between each friction material piece 16 and the backing metal plate 12 locally varies, however, cracks in the friction material pieces 16, if any, are kept from growing larger due to the presence of the large number of protruding parts 25 within the individual friction material pieces 16. It is therefore possible to efficiently prevent the friction material pieces 16 from coming off partially.

### Summary of the Embodiment

The foregoing embodiment is now summarized herein below.

(1) As thus far described, there is a possibility that cracks will occur in the friction material pieces due to a shearing force applied thereto during braking. Even in this case, however, an area of each friction material piece over which the crack will grow is limited by the protruding parts, so that the crack is kept from growing throughout the entirety of each friction material piece. Moreover, even if the crack develops and a particular friction material piece goes into a condition in which part of the friction material piece can be separated into the frictional surface side and the reinforcing plate side, the friction material piece is retained in position by the protruding parts as the friction material piece is firmly affixed to the protruding parts as well. For this reason, it is possible to prevent the friction material piece from partially coming off or scattering. In other words, it is possible to prevent the cracks from growing to such an extent that the entirety of the friction material piece comes off or scatters by means of the protruding parts and further prevent the friction material piece from partially coming off or scattering by means of the protruding parts.
(2) It is possible to configure each of the protruding parts in such a fashion that a portion of the protruding part projecting at least from a surface where the protruding part is affixed to the friction material piece is formed into a rodlike shape and irregularities are formed on the side surface of this portion of the protruding part. This configuration makes it possible to increase the contact area between each protruding part and the friction material piece. Therefore, the bond strength between the friction material pieces and the protruding parts is enhanced, making it possible to prevent the friction material pieces from coming off or scattering more efficiently.
(3) The base material of the protruding parts should be the same as that of the friction material pieces. This configuration makes it easier for the friction material pieces and the protruding parts to fuse together in the manufacture of the disc brake pad. This serves to enhance the bond strength between the friction material pieces and the protruding parts, making it possible to prevent the friction material pieces from coming off or scattering more efficiently.
(4) The protruding parts are fixed to the supporting members by mechanical fixing means. In this configuration, it is also possible to select materials which make it difficult for the supporting members and the protruding parts to fuse together. Consequently, it becomes unnecessary to select materials of the supporting members and the protruding parts based on their bond strength, making it possible to improve the degree of freedom in design with respect to the materials.

As thus far discussed, it is also possible to efficiently prevent the friction material pieces of the disc brake pad from partially coming off according to the foregoing embodiment.

## Claims

1. A disc brake pad comprising:
a supporting member (12, 14) having a plurality of protruding parts (25);
a friction material piece (16) fixed to said supporting member (12, 14), said plurality of protruding parts (25) sticking out from a surface where said friction material piece (16) is fixed to said supporting member (12, 14), the protruding parts (25) having a height which is large enough to reach a frictional surface of said friction material piece (16), the protruding parts (25) being fixed to said friction material piece (16), **characterized in that** said friction material piece (16) is made of sintered metal, the sintered metal being a copper alloy which is a copper-based material containing copper as a base material, said protruding parts (25) are made of a copper-based material containing copper as a base material which is a material similar to the material used in said friction material piece (16), and said friction material piece (16) is sintered onto said protruding parts (25) and said supporting member (12, 14),
wherein the protruding parts (25) are fixed to said supporting member (12, 14) by mechanical fixing means.

2. The disc brake pad according to claim 1, wherein a portion of each of the protruding parts (25) projecting at least from a surface where the protruding parts (25) are fixed to said friction material piece (16) is formed into a rodlike shape and irregularities are formed on a side surface of the portion of each of the protruding parts (25).

3. The disc brake pad according to claim 1, wherein a base material of the protruding parts (25) is the same as that of said friction material piece (16).

## Patentansprüche

1. Scheibenbremsbelag, umfassend:
ein Stütz- bzw. Trägerglied (12, 14) mit einer Mehrzahl vorstehender Teile (25);
eine Reibungsmaterialstück (16), das an dem Stütz- bzw. Trägerglied (12, 14) fixiert bzw. befestigt ist, wobei die Mehrzahl vorstehender Teile (25) von einer Fläche bzw. Oberfläche heraus- bzw. hervorsteht, wo das Reibungsmaterialstück (16) an dem Stütz- bzw. Trägerglied (12, 14) fixiert ist, wobei die vorstehenden Teile (25) eine Höhe aufweisen, die groß genug ist, um eine Reibungsfläche bzw. -oberfläche des Reibungsmaterialstücks (16) zu erreichen, wobei die vorstehenden Teile (25) an dem Reibungsmaterialstück (16) fixiert sind, **dadurch gekennzeichnet, dass** das Reibungsmaterialstück (16) aus Sintermetall besteht, wobei das Sintermetall eine Kupferlegierung ist, die ein kupferbasiertes Material ist, das Kupfer als ein Basismaterial enthält, die vorstehenden Teile (25) aus einem kupferbasierten Material bestehen, das Kupfer als ein Basismaterial enthält, das ein Material ähnlich dem Material ist, das bei dem Reibungsmaterialstück (16) verwendet wird, und das Reibungsmaterialstück (16) auf die vorstehenden Teile (25) und das Stütz- bzw. Trägerglied (12, 14) gesintert ist
wobei die vorstehenden Teile (25) durch mechanische Fixier- bzw. Befestigungsmittel an dem Stütz- bzw. Trägerglied (12, 14) fixiert sind.

2. Scheibenbremsbelag nach Anspruch 1, wobei ein Abschnitt jedes der vorstehenden Teile (25), die zumindest von einer Fläche bzw. Oberfläche hervorstehen, wo die vorstehenden Teile (25) an dem Reibungsmaterialstück (16) fixiert sind, stangenförmig ausgebildet ist und Unregelmäßigkeiten auf bzw. an einer Seitenfläche bzw. -oberfläche des Abschnitts jedes der vorstehenden Teile (25) gebildet sind.

3. Scheibenbremsbelag nach Anspruch 1, wobei ein Basismaterial der vorstehenden Teile (25) das gleiche ist wie das des Reibungsmaterialstücks (16).

## Revendications

1. Patin de frein à disque comprenant :
un élément de support (12, 14) ayant une pluralité de parties saillantes (25) ;
un morceau de matériau de frottement (16) fixé audit élément de support (12, 14), ladite pluralité de parties saillantes (25) ressortant d'une surface où ledit morceau de matériau de frottement (16) est fixé audit élément de support (12, 14), les parties saillantes (25) ayant une hauteur qui est suffisamment élevée pour atteindre une surface de friction dudit morceau de matériau de frottement (16), les parties saillantes (25) étant fixées audit morceau de matériau de frottement (16), **caractérisé en ce que** ledit morceau de matériau de frottement (16) est fabriqué en métal fritté, le métal fritté étant un alliage de cuivre qui est un matériau à base de cuivre contenant du cuivre comme matériau de base, lesdites parties saillantes (25) sont fabriquées en un matériau à base de cuivre contenant du cuivre comme matériau de base qui est un matériau similaire au matériau utilisé dans ledit morceau de matériau de frottement (16), et ledit morceau de matériau de frottement (16) est fritté sur lesdites parties saillantes (25) et ledit élément de support (12, 14),
dans lequel les parties saillantes (25) sont fixées audit élément de support (12, 14) par des moyens de fixation mécaniques.

2. Patin de frein à disque selon la revendication 1, dans lequel une portion de chacune des parties saillantes (25) faisant saillie au moins d'une surface où les parties saillantes (25) sont fixées audit morceau de matériau de frottement (16) est formée en une forme de type tige et des irrégularités sont formées sur une surface latérale de la portion de chacune des parties saillantes (25).

3. Patin de frein à disque selon la revendication 1, dans lequel un matériau de base des parties saillantes (25) est le même que celui dudit morceau de matériau de frottement (16).
